# DEMANDE DE BREVET EUROPEEN

(11) **EP 3 459 876 A1**
(43) Date de publication de la demande: **27.03.2019**
(21) Numéro de dépôt: 18192509.0
(22) Date de dépôt: 04.09.2018
(51) Int. Cl.: B65D 88/68, B65G 65/46, B65G 69/14

(54) **SYSTÈME D'ALIMENTATION DE POUDRES**

(30) Priorité: 20.09.2017 FR 1758691
(71) Demandeur: Commissariat à l'Energie Atomique et aux Energies Alternatives, 75015 Paris (FR)
(72) Inventeur: GONZALEZ MARTINEZ, Maria, 32786 CHANDREXA DE QUEIXA-OURENSE (ES); VANNESTE-IBARCQ, Clément, 64400 SAUCEDE (FR)
(74) Mandataire: Nony

(57) **Abrégé**

L'invention concerne un système (1) d'alimentation en poudre en phase dense comportant :
- une paroi d'injection (2) par gravité de la poudre, sous la forme d'un tronc de cône,
- une hélice tronconique (3) de forme complémentaire au moins en partie au tronc de cône de la paroi d'injection, l'hélice étant fixée à un arbre d'entraînement en rotation depuis l'extérieur de la paroi d'injection, l'hélice étant agencée à l'intérieur du cône d'injection de sorte que lorsqu'elle est mise en rotation, elle puisse venir casser les voûtes de poudre injectée, susceptibles de se former sur la hauteur du cône d'injection entre l'intérieur de ce dernier et la paroi; l'hélice comprenant sur au moins une partie de sa longueur une portion rigide (32) revêtue d'une portion souple (33).

## Description

### Domaine technique

La présente invention concerne le domaine des systèmes d'alimentation en poudres, plus précisément de poudres en phase dense, c'est-à-dire avec peu ou pas de gaz porteur.

Elle concerne en particulier les poudres cohésives, telles que les poudres de bois, c'est-à-dire qu'elles ont une tendance naturelle à former spontanément des arches et/ou des voûtes.

L'invention a trait plus particulièrement à une application d'alimentation, de contenants pressurisés ou non, en poudres de charge de matière carbonée, telle que la biomasse, le charbon ou tout autre type de poudres comme un broyat de déchets... Les contenants à alimenter peuvent être avantageusement, des réacteurs de gazéification, ou d'autres systèmes de conversion thermochimique. Dans cette application, les débits massiques de solide peuvent être très variables, depuis quelques kilogrammes jusqu'à plusieurs tonnes par heure en conditions industrielles.

L'invention vise à améliorer de tels systèmes d'alimentation de poudres, notamment en brisant systématiquement toute arche ou voûte de poudre susceptible de se produire au sein d'un cône d'injection.

Bien que décrite en référence principalement à l'application avantageuse d'injection de poudres de biomasse, l'invention peut s'appliquer à tout type de poudres dont on connait les propriétés physiques et mécaniques (granulométrie, densité, taux d'humidité, angle d'avalanche...).

### Art antérieur

Dans le domaine de l'alimentation en poudres de contenants divers et variés, on peut distinguer deux grandes catégories de dispositifs connus, ceux ayant une fonction de dosage des poudres, c'est-à-dire qui permettent de contrôler la quantité de poudre, et ceux servant à l'injection de poudres dans un contenant, en continu ou en discontinu.

Parmi les dispositifs de dosage répandus, on peut citer les dispositifs à vis, les écluses rotatives ou les sas de pressurisation, communément appelés « lock hoppers » en anglais. Par exemple, la demande de brevet WO2012/152742A1 divulgue une écluse rotative pour doser une poudre qui alimente directement depuis l'écluse un pétrisseur.

Ces dispositifs de dosage classiques s'appliquent aussi bien au domaine de la pharmacie ou de la chimie, qui nécessitent des faibles débits, comme par exemple décrit dans les brevets US 4850259 et US7984835B2, que dans le domaine de la manipulation industrielle de poudres à hauts débits. En particulier, le brevet US9227790B2 concerne une installation de gazéification de biomasse ou de charbon dans laquelle la poudre est convoyée par un convoyeur à vis hélicoïdal.

On rencontre également des sas de pressurisation, dont le volume plus ou moins important définit la finesse du dosage. Un avantage des écluses et des sas de pressurisation est qu'ils ont également un effet d'étanchéité vis-à-vis d'éventuelles fluctuations de pression en amont et en aval.

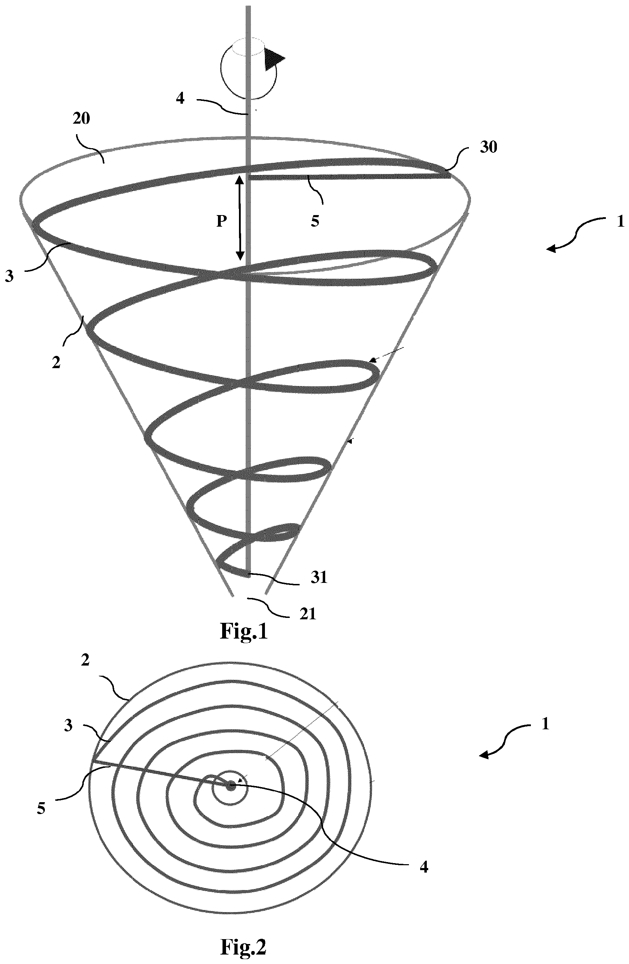

Le principal inconvénient des vis doseuses, écluses et lock hoppers est le caractère fortement discontinu du débit de poudre généré, comme cela est illustré en figure 1, où l'on voit que pour une écluse rotative connue, si l'on peut toujours définir un débit moyen constant, les variations de débit au cours du temps peuvent être importantes.

Jusqu'à présent, afin de pallier cet inconvénient, la solution consistait à agencer un grand nombre de dispositifs de dosage, soit en série fluidique avec un volume, donc un pas de débit, décroissant, par exemple des écluses rotatives avec un nombre croissants de godets de taille décroissante en allant vers le point d'injection, soit en parallèle, avec un dosage alterné de plusieurs dispositifs. Outre l'investissement et les contraintes de gestion du fonctionnement alterné, cette solution a pour inconvénient de générer un encombrement non négligeable. D'autre part, pour les poudres cohésives, des problèmes de bouchage dans les godets se produisent fréquemment.

Une autre solution connue, en particulier dans le domaine du convoyage et de la gazéification de poudre de charbon, consiste à contrôler le débit de solide par un débit additionnel de gaz : voir publications [1], [2]. Un convoyage avec gaz, aussi désigné par « injection aérée », a pour avantage de ne pas générer d'encombrement supplémentaire. En revanche, il génère un écoulement à phase fortement diluée, ce qui peut ne pas être compatible avec bon nombre de procédés en aval.

Cela est particulièrement problématique dans une installation de conversion thermochimique, dans laquelle le gaz ne participe pas à la réaction et de ce fait en diminue le rendement. Ceci peut être notamment pénalisant à haute pression, du fait de la densité accrue du gaz, qui augmente les ratios entre débit de masse du gaz et débit de masse solide. Par exemple, mettre en oeuvre un gaz de convoyage par dilution des particules de poudre dans une installation de gazéification de biomasse nécessiterait d'utiliser une partie de l'énergie de la réaction de gazéification pour réchauffer le gaz initialement froid, ce qui aurait pour effet indésirable de diminuer le rendement global de la réaction.

En ce qui concerne les dispositifs d'injection, on peut citer la littérature ancienne et fournie sur les silos de décharge. Ces éléments de type « entonnoir » en forme de tronc de cône permettent d'injecter un matériau granulaire dans un contenant plus petit. Par contre, ces entonnoirs, usuellement appelés cônes d'injection, n'ont pas pour fonction de doser le matériau granulaire et en assurent juste une décharge par gravité. Ainsi, dans ces dispositifs d'injection connus, la valeur du débit n'est pas réglable.

Un problème important que l'on rencontre systématiquement avec les entonnoirs/cônes d'injection est la création d'arches/voûtes de poudres.

Différents dispositifs d'aide à la décharge des cônes/entonnoirs, c'est-à-dire d'aide à l'écoulement des poudres au sein des cônes/entonnoirs, ont déjà été proposés. En particulier, on pourra se référer au paragraphe 12.2 de la publication [3].

On peut ainsi trouver différents dispositifs d'injection aérée par un gaz, décrits en détail dans la publication [2]. Mais, comme pour les dispositifs de dosage, ces dispositifs d'injection avec assistance pneumatique ne trouvent une application qu'en phase diluée avec une fraction volumique solide atteinte qui est de quelques %.

Un autre point pénalisant de ce type d'injection aéré est que les fonctions de dosage et d'injection de poudre ne sont pas séparées puisque c'est le mélange diphasique et donc le débit de gaz qui détermine en grande partie le débit de solide.

Enfin, pour des poudres très cohésives et/ou non aisément fluidisables, ce type d'injection est complexe à réaliser et très dépendant de la nature des poudres, comme expliqué par la publication [2], [3].

Différents dispositifs d'aide mécanique à la décharge de poudre dans un silo existent, qui sont référencés en particulier dans le paragraphe 12.3.2 de la publication [3]. Ces dispositifs mécaniques comprennent tous en un outil de décharge agencé soit au niveau de l'ouverture supérieure du silo, comme une vis sans fin, un injecteur à bandes ou vibrant..., soit dans le volume intérieur du silo ou sur ses parois, comme un agitateur, un ou plusieurs dispositifs de vibration mécanique...

Tous ces dispositifs mécaniques ne sont pas satisfaisants pour briser les arches/voûtes (dévoûtage) de poudre.

La demande de brevet US 2013/302117 propose un dispositif de dévoûtage de matériau pulvérulent au sein d'un silo de stockage de poudres, qui consiste en une pluralité de bras rotatifs qui s'étendent transversalement à l'arbre d'entraînement selon l'axe du silo en étant répartis le long dudit arbre. Ce dispositif n'est pas non plus satisfaisant. En effet, tout d'abord, les bras sont pas définition répartis ponctuellement, ce qui laisse des zones de la surface du silo qui ne sont pas concernées par le balayage des bras et qui sont donc potentiellement des zones dans lesquelles les arches/voûtes de matériau peuvent subsister. En outre, le volume occupé par les bras rotatif et leur arbre d'entraînement à l'intérieur du silo est très important et donc réduit la part du volume de stockage disponible pour le matériau.

La demande WO2015/113517 décrit un dispositif de dévoûtage constitué de roues munies de pâles flexibles à l'intérieur d'un silo de stockage de poudre, au moins une partie des roues en rotation étant en interférence mécanique avec une vis sans fin afin de casser les arches de poudre. L'inconvénient majeur de ce dispositif est que le dévoûtage ne peut être que partiel car le dispositif est localisé uniquement à proximité des parois du silo. Par conséquent, aucune cassure d'arches/voûtes ne se fait dans le volume du silo et plus particulièrement, les voûtes se formant selon la hauteur à l'intérieur dans le silo ne sont pas cassées.

Il existe donc un besoin d'améliorer les systèmes d'alimentation de poudres en phase dense, afin de s'affranchir des inconvénients précités des dispositifs d'aide à la décharge notamment en permettant de casser/briser efficacement toute arche/voûte de poudres susceptible de se produire à l'intérieur d'un volume d'injection en vue d'améliorer l'écoulement.

Le but de l'invention est de répondre au moins en partie à ce besoin.

### Exposé de l'invention

Pour ce faire, l'invention concerne, sous un de ses aspects, un système d'alimentation en poudre en phase dense comportant :
- une paroi d'injection par gravité de la poudre, sous la forme d'un tronc de cône,
- une hélice tronconique de forme complémentaire au moins en partie au tronc de cône de la paroi d'injection, l'hélice étant fixée à un arbre d'entraînement en rotation depuis l'extérieur de la paroi d'injection, l'hélice étant agencée à l'intérieur du cône d'injection de sorte que lorsqu'elle est mise en rotation, elle puisse venir casser les voûtes de poudre injectée, susceptibles de se former sur la hauteur du cône d'injection entre l'intérieur de ce dernier et la paroi ; l'hélice comprenant sur au moins une partie de sa longueur une portion rigide revêtue d'une portion souple.

Par « paroi d'injection par gravité de la poudre », on comprend dans le cadre de l'invention, un écoulement gravitaire de la poudre par l'ouverture inférieure du tronc de cône en vue d'une injection directe dans un réacteur ou en vue d'un transfert depuis l'intérieur du cône qui peut ainsi constituer un cône de stockage.

On comprend par rigide « ce qui est ferme, qui résiste à la pression ou à la déformation », donc par contraposition « souple » correspond à ce « qui peut être courbé, plié sans casser ni s'abîmer ». La rigidité des matériaux de l'hélice est mesurée par le module de Young ou module d'élasticité (longitudinale), qui correspond à une constante, typique de chaque matériau, qui relie la contrainte de traction (ou de compression) et le début de la déformation d'un matériau élastique isotrope (de propriétés homogènes). Il est mesuré en unités de pression (Pa). Des exemples de matériaux souples, avec un bas module de Young sont le caoutchouc (0.001 à 0.1 GPa), le polyéthylène (0.2 à 0.7 GPa), ou le cartilage (0.024 GPa). Ces matériaux, ou autres matériaux souples, peuvent être associés à des matériaux rigides, comme la fibre de carbone haut module (640 GPa), l'acier inoxydable (autour de 200 GPa) ou le Tungstène (406 GPa), ou à d'autres matériaux rigides, ceci pour former l'hélice selon l'invention. On pourra se référer à la publication [4].

Ainsi, l'invention consiste essentiellement à introduire une hélice rotative de forme tronconique au moins en partie complémentaire à l'intérieur d'un cône d'injection d'une poudre cohésive.

L'hélice mise en mouvement de rotation depuis l'extérieur par le biais de son arbre d'entraînement relié à un moteur externe, va venir au plus près, voire balayer la paroi intérieure du cône d'injection, et ainsi casser/briser les arches ou voûtes qui se forment entre la poudre cohésive et la paroi intérieure du cône d'injection, afin d'améliorer l'écoulement de la poudre, et sans qu'il y ait besoin d'injecter un gaz.

Comparativement aux dispositifs d'aide à la décharge mécanique ou pneumatique selon l'état de l'art, le principal avantage d'un système d'alimentation de poudre avec hélice selon l'invention est que cette dernière, avec son mouvement rotatif, parcourt toute la surface intérieure du cône d'injection, atteignant tous les endroits possibles de formation de voûte ou arche entre la poudre cohésive et la paroi d'injection.

Un autre avantage est que l'espace occupé par l'hélice à l'intérieur du cône d'injection peut être considéré comme négligeable, ce qui permet à la poudre d'occuper la plupart du volume du cône d'injection tout en facilitant son écoulement.

On veille bien entendu à dimensionner tous les paramètres pour réaliser véritablement un dévoûtage ou encore un brise voûtes/arches de poudre dans le volume du cône d'injection qui reçoit la poudre depuis son ouverture supérieure et non un transport/convoyage assisté de la poudre qui se fait au contraire par gravité.

En particulier, le matériau constitutif de l'hélice peut être choisi en métal ou en plastique avec plus ou moins de rigidité en fonction du type de poudre à injecter.

De même, la largeur et le pas de l'hélice sont déterminés en fonction du diamètre du cône et des caractéristiques de la poudre.

La vitesse de rotation de l'hélice peut être variable, en fonction des caractéristiques de la poudre.

La portion souple de l'hélice permet de faire varier l'espace entre l'hélice et la paroi d'injection.

Ainsi, l'hélice selon l'invention peut venir racler la paroi d'injection à différents degrés de contact du fait de la présence de la portion souple, ou bien rester à une distance plus ou moins éloignée de la paroi. La souplesse d'une partie de l'hélice permet de mieux s'adapter aux caractéristiques de la poudre cohésive et d'accéder plus facilement à casser les liens entre les particules de la poudre cohésive, spécialement quand elles sont imbriquées dans une voûte ou arche.

L'agencement de l'hélice définit :
- un espace libre minimal entre l'hélice et la paroi du cône d'injection, de préférence sans qu'il y ait un contact direct avec la paroi ou avec un contact très léger, la fonction recherchée étant la cassure de toute arche/voûte afin d'améliorer l'écoulement de la poudre.
- une surface de recouvrement maximale sur la surface intérieure du cône d'injection.

L'arbre d'entraînement est de préférence agencé selon l'axe du tronc de cône d'injection.

Avantageusement, l'hélice est fixée à l'arbre d'entraînement directement par son extrémité inférieure et par le biais d'une tige de fixation par son extrémité supérieure. Ainsi, on minimise l'encombrement pris par l'hélice et son arbre d'entraînement à l'intérieur du volume conique d'injection, ce qui laisse d'autant plus de volume disponible pour la poudre à injecter.

Selon un mode de réalisation avantageux, l'hélice présente un pas réglable. Ajuster le pas de l'hélice en l'étirant ou à l'inverse en la raccourcissant permet de s'adapter au mieux aux caractéristiques de la poudre contenue dans le cône d'injection, et donc de casser/briser de manière optimale les arches/voûtes d'une poudre donnée.

L'invention a également pour objet, selon un autre de ses aspects, une installation de conversion thermochimique comprenant un réacteur de gazéification agencé en aval du système décrit précédemment.

L'installation est particulièrement destinée à convertir de la poudre de biomasse, le réacteur étant un réacteur de type à flux entraîné.

L'invention est particulièrement avantageuse à mettre en oeuvre dans une installation de conversion thermochimique en réacteur à flux entrainé (RFE). En effet, les règles de sécurité dans ce type d'installation imposent de garantir une très grande stabilité du débit de poudre injectée.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes, parmi lesquelles :
- la figure 1 est une vue schématique en perspective d'un système d'alimentation en poudre cohésive selon l'invention ;
- la figure 2 est une vue de dessus du système selon la figure 1;
- la figure 3 est une vue schématique en perspective d'un système d'alimentation en poudre cohésive selon un mode de réalisation avantageux de l'invention.

On précise ici dans l'ensemble de la présente demande, les termes « inférieur », « supérieur », « dessus », « dessous », « intérieur », « extérieur », « « interne » « externe» sont à comprendre par référence à un tronc de cône d'injection selon l'invention avec son axe agencé à la verticale avec l'entrée sur le dessus et la sortie sur le dessous.

On précise également que les termes « amont », « aval », « entrée », « sortie » sont à considérer par rapport au sens de circulation de la poudre dans le système selon l'invention.

Le système d'alimentation 1 en poudre en phase dense représenté en figures 1 et 2 comprend tout d'abord un injecteur 2 dont la paroi est sous la forme d'un tronc de cône d'injection.

La poudre tombe par gravité directement dans l'ouverture supérieure 20 du cône d'injection 2 et est destinée à s'écouler par l'ouverture inférieure 21 du cône d'injection 2.

Afin de casser/briser toute arche ou voûte de poudre à l'intérieur du volume délimité par le cône d'injection 2, les inventeurs ont pensé à y implanter à une hélice tronconique 3, destinée à être entraînée en rotation, depuis l'extérieur du cône 2, par un arbre d'entraînement 4 auquel elle est liée.

Comme visible sur les figures, l'hélice 3 est de forme tronconique complémentaire avec le cône d'injection 2, de préférence sur toute sa hauteur.

Afin de minimiser l'encombrement au sein du volume délimité par le cône 2, l'hélice tronconique 3 est fixée à l'arbre d'entraînement 4 uniquement par ses deux extrémités libres 30, 31. Ainsi, l'extrémité inférieure 31 est fixée directement en bout d'arbre d'entraînement 4 tandis que l'extrémité supérieure 30 est fixée à l'arbre d'entraînement 4 par le biais d'une tige de fixation 5.

Le pas de l'hélice P peut être réglé afin de s'adapter au mieux aux caractéristiques de la poudre en écoulement gravitaire dans le cône d'injection 2.

Le fonctionnement du système 1 qui vient d'être décrit est le suivant.

Pendant que la poudre s'écoule par gravité depuis l'ouverture supérieure 20 jusqu'à l'ouverture inférieure 21 du cône 2, l'hélice 3 est mise en mouvement de rotation depuis l'extérieur par le biais de son arbre d'entraînement 4 relié à un moteur externe.

L'agencement de l'hélice 3 est tel qu'elle va venir au plus près, voire balayer la paroi intérieure du cône d'injection 2. De cette manière, toutes les arches ou voûtes qui se forment entre la poudre cohésive au sein du volume et la paroi intérieure du cône d'injection sont brisées.

On obtient ainsi un écoulement par gravité de toute la poudre contenue dans le cône d'injection 2.

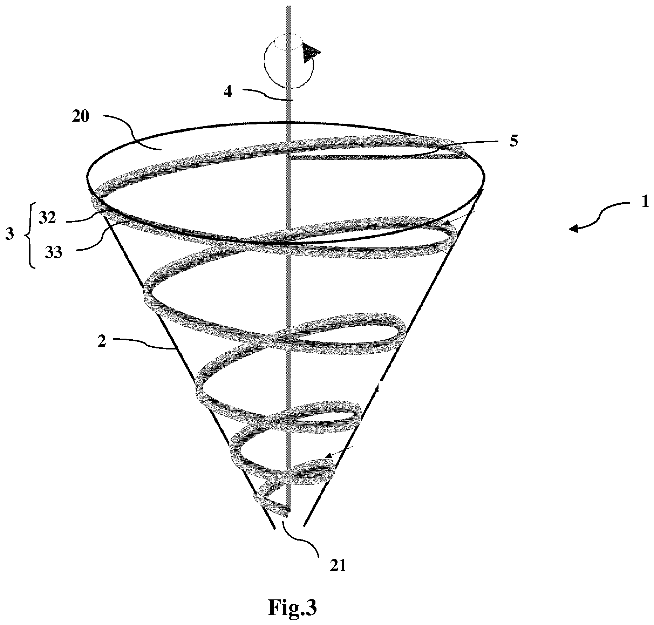

Un mode de réalisation avantageux d'un système d'alimentation 1 est montré en figure 3.

Selon ce mode, l'hélice 3 comprend une portion rigide 32 constituant l'armature de l'hélice, sur laquelle est fixée ou surmoulée une portion souple 33. Ainsi, la portion souple 33 peut venir racler la paroi intérieure du cône 2 selon différents degrés de contact. Elle peut aussi rester à une distance plus ou moins éloignée de cette paroi. La souplesse d'une partie de l'hélice permet de mieux s'adapter aux caractéristiques de la poudre cohésive et de casser plus facilement les liens entre les particules de la poudre cohésive, spécialement quand elles sont imbriquées dans une voûte ou arche.

D'autres variantes et avantages de l'invention peuvent être réalisés sans pour autant sortir du cadre de l'invention.

Si dans l'application préférée envisagée, la poudre qui s'écoule depuis le cône d'injection est injectée directement dans un réacteur, on peut envisager un écoulement intermédiaire par gravité depuis le cône qui peut aussi constituer alors uniquement un cône de stockage.

L'invention n'est pas limitée aux exemples qui viennent d'être décrits; on peut notamment combiner entre elles des caractéristiques des exemples illustrés au sein de variantes non illustrées.

### Références citées

*[1]: "*Pneumatic convection of solids", KLINGZING, G.E., RIZK, F., MARCUS, R. & LEUNG, L.S., third édition, 2010.
*[2]: "*Pneumatic conveying design guide", MILLS, D, Elsevier, 2006.
*[3]: "*Powders and Bulk Solids: Behavior, Characterization, Storage and Flow." D. Schulze, Springer Science & Business Media, 2007.
[4]: Michael F. Ashby, David R. H. Jones, Matériaux 1. Propriétés et applications, éd. Dunod, chap. 3 : « Les constantes d'élasticité »*.*

## Revendications

1. Système (1) d'alimentation en poudre en phase dense comportant :
- une paroi d'injection (2) par gravité de la poudre, sous la forme d'un tronc de cône,
- une hélice tronconique (3) de forme complémentaire au moins en partie au tronc de cône de la paroi d'injection, l'hélice étant fixée à un arbre d'entraînement en rotation depuis l'extérieur de la paroi d'injection, l'hélice étant agencée à l'intérieur du cône d'injection de sorte que lorsqu'elle est mise en rotation, elle puisse venir casser les voûtes de poudre injectée, susceptibles de se former sur la hauteur du cône d'injection entre l'intérieur de ce dernier et la paroi ; l'hélice comprenant sur au moins une partie de sa longueur une portion rigide (32) revêtue d'une portion souple (33).

2. Système d'alimentation (1) selon la revendication 1, l'arbre d'entraînement étant agencé selon l'axe du tronc de cône d'injection.

3. Système d'alimentation (1) selon la revendication 1 ou 2, l'hélice étant fixée à l'arbre d'entraînement directement par son extrémité inférieure (31) et par le biais d'une tige de fixation (5) par son extrémité supérieure (30).

4. Système d'alimentation (1) selon l'une des revendications précédentes, l'hélice présentant un pas réglable.

5. Installation de conversion thermochimique comprenant un réacteur de gazéification agencé en aval du système selon l'une quelconque des revendications précédentes.

6. Installation selon la revendication 5, destinée à convertir de la poudre de biomasse, le réacteur étant un réacteur de type à flux entraîné.
